# FASCICULE DE BREVET EUROPEEN

(11) **EP 2 512 960 B1**
(45) Date de publication et mention de la délivrance du brevet: **25.09.2013**
(21) Numéro de dépôt: 10787024.8
(22) Date de dépôt: 30.11.2010
(51) Int. Cl.: B26D 7/32, B65H 29/16, B65G 47/26, B26D 7/06

(54) **Unité de séparation d'un support prédécoupé positionnée en aval d'une unité de découpe**
Trenneinheit eines vorgestanzten Trägers, die einer Stanzeinheit nachgeschaltet ist
Unit for separating a scored support positioned downstream a cutting unit

(30) Priorité: 16.12.2009 EP 09015556
(43) Date de publication de la demande: 24.10.2012
(73) Titulaire: BOBST MEX SA, 1031 Mex (CH)
(72) Inventeur: DITTLI, Oskar, CH-1018 Lausanne (CH)
(74) Mandataire: Poirier, Jean-Michel Serge
(86) Numéro de dépôt international: PCT/EP2010/007240
(87) Numéro de publication internationale: WO 2011/072800

(56) Documents cités:
- EP-A2- 1 195 335
- US-B1- 7 086 521

## Description

La présente invention concerne une unité pour séparer un support prédécoupé en plusieurs sous-supports séparés. L'unité de séparation est utilisable notamment en étant positionnée en aval d'une unité de découpe dans une machine de production d'emballages.

Une machine de production d'emballages est destinée à la fabrication de boîtes, qui formeront des emballages, après pliage et collage. Dans cette machine, un support plan continu initial, tel qu'une bande plane de carton, est déroulé et est imprimé par une unité d'impression, constituée elle-même de sous-unités sous la forme de groupes imprimeurs. La bande est ensuite transférée dans une unité de découpe. Après découpe, les supports ou poses obtenus ont des zones de déchet qui sont éliminées dans une unité d'éjection des déchets.

Un support ou pose, est composé de plusieurs sous-supports ou boîtes. Selon le type d'unité de découpe utilisé, par exemple avec une découpe à platine, les boîtes sont rattachées entre elles par des points d'attache. Les points d'attache relient deux bords d'une ligne de coupe entre deux boîtes et constituent des ponts de même matière que les boîtes et les poses. Avec une découpe rotative, les boîtes sont juxtaposées.

Les supports ou poses sont ensuite séparées dans une unité de séparation ou séparateur de façon à obtenir des sous-supports ou boîtes individualisées. Cette unité est destinée à écarter transversalement les boîtes les unes des autres et/ou si nécessaire à rompre des points d'attache, en conduisant chacune des boîtes sur une trajectoire divergente. Cette trajectoire s'obtient en orientant en éventail, i.e. selon des directions divergentes, des rampes de convoyage destinées à acheminer les poses de la sortie de l'unité de découpe à la sortie de l'unité de séparation.

De ce fait, les poses prédécoupées, sortant de l'unité de découpe selon une série longitudinale de lignes parallèles adjacentes, sont réorientées au moyen des rampes de convoyage selon une série de lignes parallèles espacées latéralement, de telle sorte que deux boîtes latéralement adjacentes ne sont plus reliées entre elles. Les boîtes individualisées sont ensuite acheminées vers une unité d'empilage pour un pliage et un collage ultérieur.

Les rampes doivent être disposées de part et d'autres d'une ligne longitudinale médiane de la pose. Le nombre de rampes, l'angle et l'écartement des rampes dans un plan correspondant à celui des poses sont choisis pour permettre une séparation optimale en fonction du layout, i.e. de la disposition, des boites sur la pose. L'opérateur doit modifier rapidement et simplement l'orientation et la position des rampes de convoyage à chaque nouveau travail. Il doit intervenir au centre de la machine pour l'ajustement des rampes, ce qui n'est pas très ergonomique.

### Etat de la technique

Le document US- 3.860.232 décrit un séparateur dans lequel l'orientation des rampes de convoyage est réglée manuellement.

Cette opération est toutefois fastidieuse et prend du temps. Le temps d'immobilisation du séparateur et ainsi de l'ensemble de la machine utilisé au réglage manuel de chacune des rampes se traduit au final par une perte de production importante. Par ailleurs, dans ce document, il n'est pas possible de déplacer latéralement les rampes de convoyage les unes par rapport aux autres.

On connaît également d'après le document EP- 1.195.335 une unité selon le préambule de la revendication 1, dans laquelle l'orientation et la position des rampes de convoyage est réglée automatiquement en fonction du travail à effectuer. Deux ensembles de remorquage possédant chacun un chariot sont prévus. Chacun des chariots possède un moyen d'engagement destiné à s'engager dans un pion disposé sur chacune des rampes de convoyage de telle sorte que le chariot entraîne la rampe de convoyage dans son déplacement.

Un repérage optique des positions des pions d'engagement de la rampe à déplacer positionne exactement les deux chariots dans une position initiale d'engagement. Un contrôle informatisé coordonne le déplacement simultané des deux chariots vers la position finale de la rampe. Un système de verrouillage commun est également prévu pour maintenir les rampes en position. Ces moyens de verrouillage sont activés lorsque les moyens d'engagement sont désengagés des pions correspondants.

En raison de la disposition du chariot et du moyen d'engagement, l'agencement des rampes doit se faire dans un ordre précis, en commençant par la rampe la plus à l'extérieur. Tout nouveau réglage, en cas de nouveau travail ou en cas d'erreur de l'opérateur, implique un rangement latéral de toutes les rampes, puis un nouveau démarrage des deux ensembles de remorquage. De plus, il est impossible de déplacer plusieurs rampes à la fois, du fait que le système optique ne permet pas de repérer plusieurs positions de pion en même temps.

Lors du déplacement d'une des rampes de convoyage, les autres rampes de convoyage ne sont plus verrouillées en raison du verrouillage-déverrouillage commun. Ceci est un autre inconvénient, car un déplacement accidentel d'une rampe de convoyage correctement positionnée pourrait se produire durant le réglage des autres rampes de convoyage, entraînant un mauvais positionnement des boîtes au sein de l'unité de séparation.

### Exposé de l'invention

Un objectif principal de la présente invention consiste à mettre au point une unité destinée à séparer un support prédécoupé en plusieurs sous-supports séparés positionnée en aval d'une unité de découpe pour une machine de réalisation d'emballages. Un deuxième objectif est d'optimiser la précision de la séparation des supports prédécoupés en sous-supports individuels séparés. Un troisième objectif est de réaliser une unité de séparation permettant une adaptation rapide à tout nouveau travail. Un quatrième objectif est de prévoir une unité de séparation munie de réglages rapides et faciles du nombre, de l'angle et de la position des rampes. Un cinquième objectif encore est celui d'obtenir une unité de séparation permettant d'éviter les inconvénients de l'état de la technique. Un autre objectif encore est celui de prévoir une machine de production d'emballages avec une unité de découpe, une unité d'éjection des déchets et une unité de séparation.

L'invention vise une unité destinée à séparer un support prédécoupé en plusieurs sous-supports séparés, comprenant :
- des moyens de guidage transversaux amont et des moyens de guidage transversaux aval,
- des rampes de convoyage, qui sont aptes à convoyer le support prédécoupé et les sous-supports séparés, et qui sont montées coulissantes et pivotantes sur les moyens de guidage amont et sur les moyens de guidage aval,
- des moyens de déplacement et de positionnement des rampes de convoyage le long des moyens de guidage transversaux amont et des moyens de guidage transversaux aval, et
- des moyens de verrouillage amont et des moyens de verrouillage aval, aptes à maintenir chacune de ces rampes de convoyage dans une position verrouillée par rapport à ces moyens de guidage transversaux amont et ces moyens de guidage transversaux aval.

Conformément à un aspect de la présente invention, l'unité est caractérisée en ce que les moyens de déplacement et de positionnement comprennent un élément mobile, se déplaçant entre ces moyens de guidage transversaux amont et ces moyens de guidage transversaux aval, et portant
- des moyens de déverrouillage amont et des moyens de déverrouillage aval, aptes à coopérer avec les moyens de verrouillage amont et les moyens de verrouillage aval, pour permettre de libérer ces rampes de convoyage, et
- des moyens de saisie amont et des moyens de saisie aval aptes à saisir ces rampes de convoyage,
de façon à entraîner ces rampes de convoyage, le long de ces moyens de guidage transversaux amont et ces moyens de guidage transversaux aval et à les disposer selon une configuration en éventail.

Autrement dit, l'unité de séparation permet de réaliser un réglage facilité de la position et de l'orientation des rampes de convoyage grâce à un unique élément mobile. L'unité de séparation permet également de régler la position et l'orientation d'une ou plusieurs rampes de convoyage, tout en maintenant les autres rampes dans leur état verrouillé. En raison de l'agencement de l'élément mobile, il est possible de régler la position d'une seule rampe sans tenir compte de la position des autres rampes. Le déplacement transversal et l'angle de divergence des rampes sont ainsi effectués rampe par rampe.

Dans un autre aspect de l'invention, une machine de production d'emballages est caractérisée en ce qu'elle comprend l'unité présentant une ou plusieurs des caractéristiques techniques décrites ci-dessous et revendiquées, positionnée en aval d'une unité de découpe et d'une unité d'éjection des déchets.

Les sens amont et aval sont définis en faisant référence au sens de déplacement du support, suivant la direction longitudinale dans l'unité de séparation et dans l'ensemble de la machine de production d'emballages. La direction longitudinale est définie en faisant référence au sens de déplacement du support dans l'unité de séparation et dans la machine, selon son axe longitudinal médian. La direction transversale est définie comme étant la direction perpendiculaire à la direction de déplacement du support.

### Brève description des dessins

D'autres avantages et caractéristiques de la présente invention seront mieux compris à la lecture des modes non limitatifs de réalisation de l'invention et en référence aux dessins dans lesquels:
- la Figure 1 représente une vue en perspective d'une unité de séparation selon l'invention ;
- les Figures 2 à 9 représentent des vues partielles en perspective d'une rampe de convoyage et des moyens de déplacement et de positionnement, montrant les différentes étapes de déplacement et de positionnement de la rampe ;
- la Figure 10 représente une vue en coupe des moyens de verrouillage dans la position verrouillée d'une rampe ; et
- la Figure 11 représente une vue latérale des moyens de verrouillage et des moyens de déverrouillage dans la position déverrouillée d'une rampe.

### Exposé détaillé de modes de réalisation préférés

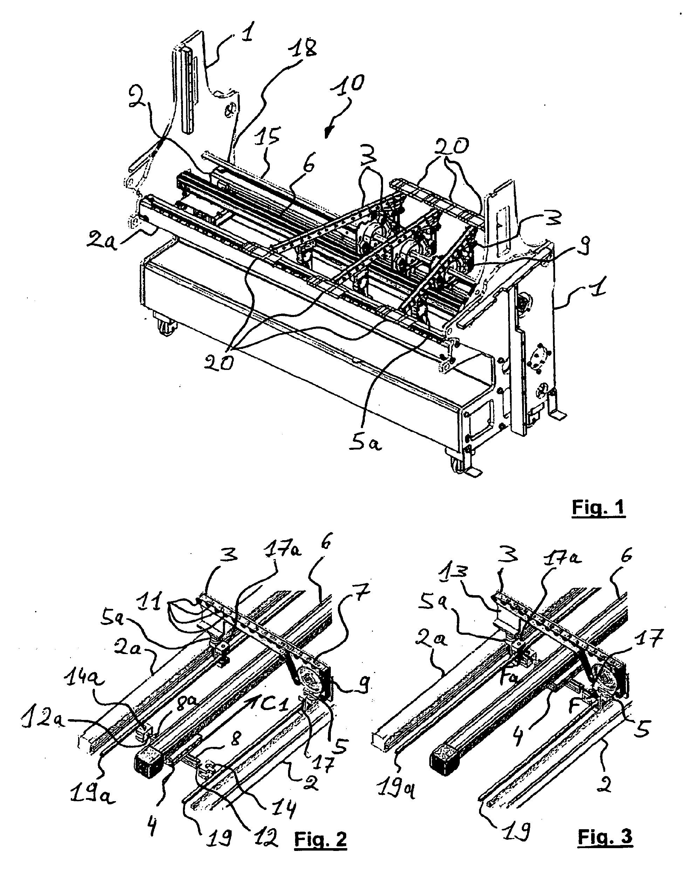

Une unité de séparation 10 est positionnée en aval d'une unité de découpe et d'une unité d'éjection des déchets dans une machine de production d'emballage (non représentée). Comme le montre la Figure 1, l'unité 10 permet de séparer des supports, i.e. dans ce cas, des poses prédécoupées, en sous-supports, i.e. dans ce cas, des boîtes individualisées 20. Ces poses et ainsi ces boîtes 20 sont par exemple en carton.

L'unité 10 est prévue pour recevoir un flux de rangées de boîtes 20 adjacentes. Dans cet exemple de réalisation, les boîtes 20 sortent de l'unité de découpe en étant toujours reliées les unes aux autres par des petits ponts de matière. Les boîtes 20 quittent l'unité de séparation 10 en étant séparées les unes des autres.

La machine de production peut ensuite comprendre un module d'alignement (non représenté), positionné en aval de l'unité 10, pour redresser les boîtes 20 et les placer selon plusieurs lignes longitudinales parallèles. Les boîtes 20 sont ensuite mises en nappe dans une unité de mise en nappe (non représentée), positionnée en aval de l'unité 10.

Les poses se déplacent initialement toutes selon la direction longitudinale, à partir d'une extrémité de réception amont de l'unité 10. L'unité 10 déplace ensuite ces poses jusqu'à une extrémité de livraison aval au moyen de plusieurs rampes de convoyage 3 disposées en face de chacune des rangées de boîtes 20. Ces rampes de convoyage 3 sont aptes à convoyer le support prédécoupé et les sous-supports séparés.

Ces rampes 3 ont des orientations divergentes en éventail de manière à séparer les rangées de boîtes 20 les unes des autres. Pour régler l'orientation en oblique des rampes 3, l'unité 10 comporte un moyen de guidage linéaire amont 2 (voir Figures 1 à 9) et un moyen de guidage linéaire aval 2a (voir Figures 2 à 9). Les rampes 3 sont montées de façon à coulisser et à pivoter sur les moyens de guidage amont (2) et aval (2a). Ces moyens de guidage 2 et 2a sont fixés à leurs deux extrémités à un châssis 1 de l'unité 10. Les moyens de guidage 2 et 2a sont sensiblement transversaux et parallèles entre eux.

Afin de déplacer les boîtes 20 de l'extrémité de réception à l'extrémité de livraison, chacune des rampes 3 comporte au moins une courroie d'entraînement 7 montée sur plusieurs roulettes de guidage 11 (voir Figure 2). La courroie 7 est entraînée par une poulie principale d'entraînement 9. Seules les rampes inférieures 3 ont été représentées en Figure 1. A chacune des rampes inférieures 3 correspond une rampe supérieure, les boîtes étant maintenues dans une zone de pincement entre la courroie 7 d'une rampe inférieure 3 et une courroie d'une rampe supérieure.

L'ensemble formé par la courroie 7, la poulie 9 et les roulettes 11 est supporté par un cadre support 13. Les extrémités amont 5 et aval 5a du cadre support 13 sont montées de façon à coulisser et pivoter respectivement sur les moyens de guidage amont 2 et aval 2a.

La courroie 7 possède une surface de contact plate de manière à faciliter le déplacement des boîtes 20. La poulie 9 est enfichée dans un arbre d'entraînement transversal 15. La poulie 9 est entraînée en rotation par l'arbre d'entraînement transversal 15 qui est commun à toutes les rampes 3. L'arbre 15 est mécaniquement connecté à un moteur d'entraînement. La poulie 9 est mobile en translation transversale le long de cet arbre 15. Les rampes 3 restent ainsi mobiles en translation le long de cet arbre 15.

L'unité 10 comprend ensuite des moyens de déplacement et de positionnement des rampes 3 selon une configuration en éventail le long des moyens de guidage amont 2 et aval 2a. Ces moyens de déplacement et de positionnement sont sous la forme d'un élément mobile ou chariot 4.

Selon l'invention, le chariot 4 se déplace le long d'un rail central transversal 6 disposé parallèlement entre les moyens de guidage amont 2 et aval 2a. Le rail 6 peut être disposé à égale distance entre les moyens de guidage amont 2 et aval 2a. Dans une forme préférée de l'invention, le chariot 4 est actionné grâce à une courroie crantée, disposée à l'intérieur du rail 6, et un moteur d'entraînement.

Selon l'invention, le chariot 4 porte les moyens de déverrouillage. Ces moyens de déverrouillage comprennent un vérin amont 8 dirigé longitudinalement vers l'extrémité de réception, i.e. vers l'amont, et un vérin aval 8a dirigé longitudinalement vers l'extrémité de livraison, i.e. vers l'aval. Chacun des vérins amont 8 et aval 8a comporte et actionne respectivement une tige mobile amont 12 et aval 12a. Des appuis amont 14 et aval 14a sont fixées respectivement à l'extrémité libre de chacune des tiges amont 12 et aval 12a.

Les rampes 3 comprennent des moyens de verrouillage amont 17 et aval 17a aptes à maintenir les rampes 3 dans une position déterminées et permettant d'immobiliser à volonté ces rampes 3 respectivement sur les moyens de guidage amont 2 et aval 2a. Les moyens de verrouillage 17 et 17a sont disposés respectivement aux extrémités 5 et 5a du cadre support 13 des rampes 30. Les moyens de verrouillage 17 et 17a sont destinés à empêcher le déplacement de ces extrémités 5 et 5a le long des moyens de guidage 2 et 2a.

Les moyens de déverrouillage amont et aval sont aptes à coopérer avec les moyens de verrouillage amont 17 et aval 17a, pour permettre de libérer les rampes 3, de façon à les entraîner le long desdits moyens de guidage amont 2 et aval 2a et à les disposer selon une configuration en éventail. Les vérins 8 et 8a avec leur tige 12 et 12a et leur appui 14 et 14a servent à déverrouiller les moyens de verrouillage 17 et 17a.

En référence aux Figures 2 à 9, il est représenté les étapes successives de déplacement d'une des rampes de convoyage 3. La rampe 3 passe d'une position initiale, alignée avec la direction longitudinale, à une position finale, déplacée latéralement et faisant un angle de divergence avec la direction longitudinale. L'unité 10 peut comprendre un volume ou zone de parcage 18 pour une ou plusieurs rampes non utilisées, située à proximité du châssis 1.

Dans une première position (voir Figure 2), la rampe 3 est stockée dans la zone de parcage 18 de l'unité 10. Une ou plusieurs rampes inutilisées pour le travail en cours restent en attente pendant le temps de réglage de la position de la rampe 3 et/ou pendant le temps de travail de séparation.

Dans cette première position, la rampe 3 est alignée avec la direction longitudinale. La rampe 3 est verrouillée en position à la fois au moyen de guidage amont 2 et aval 2a par son extrémité amont 5 et aval 5a. Le chariot 4 est quant à lui positionné initialement à l'extrémité du rail 6. Les tiges 12 et 12a sont totalement rétractées à l'intérieur des vérins 8 et 8a. La rampe 3 est ensuite déplacée vers sa position de fonctionnement.

Dans une deuxième position (voir Figure 3), le chariot 4 est déplacé (Flèche C1 en Figure 2) le long du rail 6, de manière à positionner les appuis 14 et 14a en face des extrémités 5 et 5a.

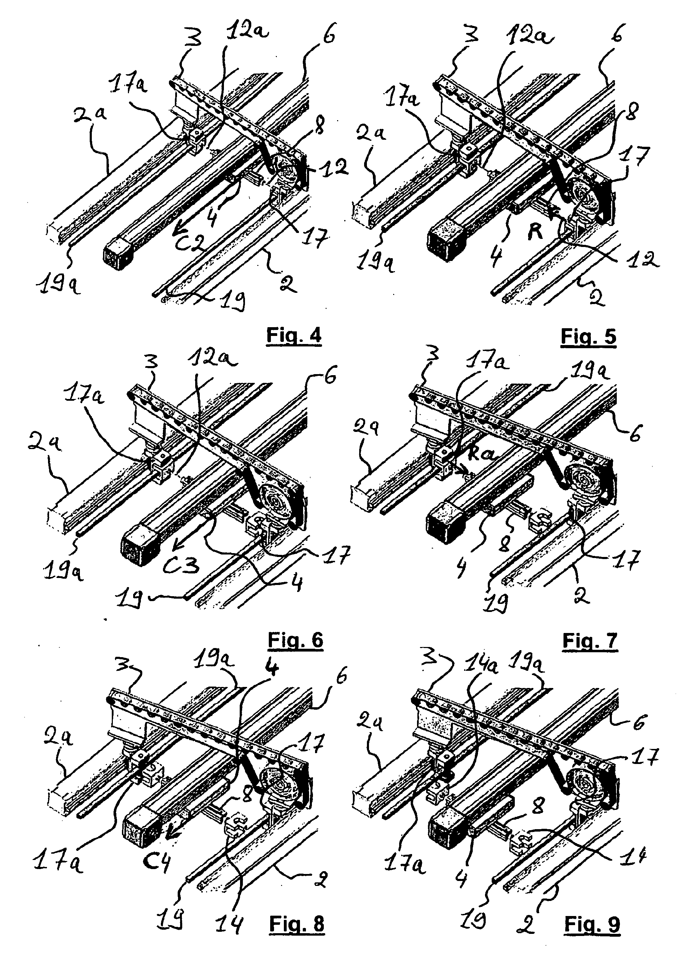

Dans une troisième position (voir Figure 4), les vérins 8 et 8a sont actionnés (Flèches F et Fa en Figure 3) de manière à déployer les tiges 12 et 12a en direction des extrémités 5 et 5a. Dans cette nouvelle position des tiges 12 et 12a, chacune des extrémités 5 et 5a se trouve déverrouillée au moyen des appuis 14 et 14a. Par ailleurs, des éléments de mise en prise intégrés aux appuis 14 et 14a sont agencés de façon à saisir ces extrémités 5 et 5a. De ce fait, dans cette position déverrouillée amont et aval, la rampe 3 reste solidaire en étant accrochée au chariot 4 lors de ses déplacements latéraux.

Dans une quatrième position (voir Figure 5), le chariot 4 est déplacé latéralement (Flèche C2 en Figure 4) le long du rail 6. Le chariot 4 entraîne transversalement dans son déplacement la rampe 3 restée dans sa position déverrouillée amont et aval sous l'action des vérins 8 et 8a. Dans cette nouvelle position transversale, la rampe 3 reste alignée avec la direction longitudinale.

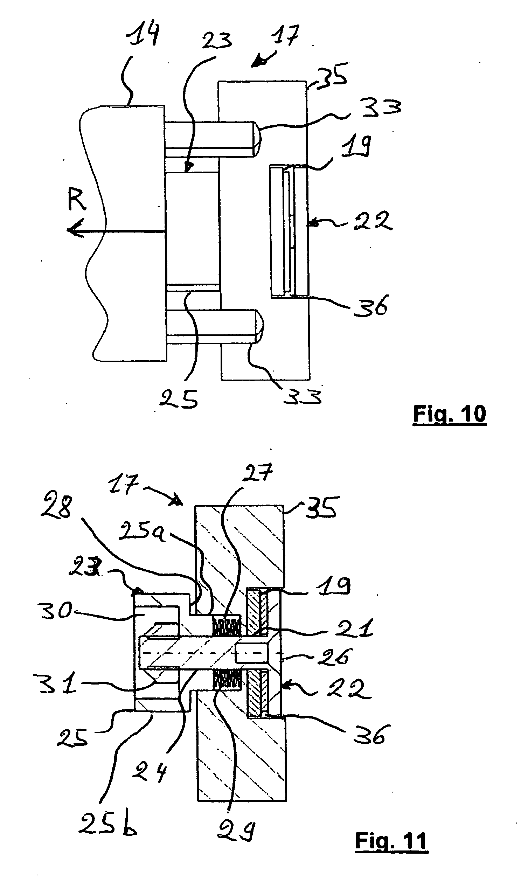

Dans une cinquième position (voir Figure 6), le vérin 8 est actionné de manière à rétracter (Flèche R en Figure 5 et 10) la tige amont 12 en direction du rail 6. Dans cette position transversale, l'extrémité amont 5 est à nouveau verrouillée.

Dans une sixième position (voir Figure 7), le chariot 4 est déplacé latéralement (Flèche C3 en Figure 6) le long du rail 6. Le chariot 4 entraîne dans son déplacement uniquement l'extrémité aval 5a, du fait de sa position déverrouillée, mais pas l'extrémité amont 5, du fait de sa position verrouillée. Dans cette position transversale, la rampe 3 est inclinée par rapport à la direction longitudinale. Cette position correspond à la position finale de la rampe 3.

Dans une septième position (voir Figure 8), le vérin 8a est actionné de manière à rétracter (Flèche Ra en Figure 7) la tige 8a en direction du rail 6. Dans cette position transversale, l'extrémité aval 5a est à nouveau verrouillée. En raison de l'écart entre l'extrémité aval 5a et l'extrémité amont 5, la rampe 3 est verrouillée dans une position divergente en oblique.

Dans une huitième position (voir Figure 9), le chariot 4 est déplacé latéralement (Flèche C4 en Figure 8) le long du rail 6, de manière à revenir à sa position initiale en bout de rail 6.

De cette manière, un seul et même chariot 4 va déplacer et positionner de manière adéquate, les unes après les autres, toutes les rampes 3 utiles pour le travail de séparation envisagé. Cette procédure de déplacement peut être adaptée à d'autres positions initiales ou finales de la rampe 3 ou du chariot 4.

Les étapes précédemment mentionnées sont réalisables dans l'ordre inverse, de façon à ramener la rampe 3 de sa position finale à sa position initiale. Il est également envisageable d'utiliser un principe similaire lors des déplacements de la rampe 3 d'une position oblique à une autre position oblique. Ce principe consiste notamment à ramener d'abord la rampe 3 dans une position alignée avec la direction longitudinale, avant de déplacer latéralement la rampe 3, puis d'orienter à nouveau cette rampe 3 selon une direction oblique.

Comme cela est visible dans les Figures 1 à 11, les moyens de verrouillage amont 17 et aval 17a sont formés d'une part d'une coulisse prenant la forme de lames rigides transversale amont 19 et aval 19a fixée sur le châssis 1. Les lames 19 et 19a s'étendant de manière sensiblement parallèle aux moyens de guidage amont 2 et aval 2a et au rail 6. Ces lames 19 et 19a possèdent chacune une ouverture centrale oblongue 21 (visible en Figure 11).

L'intérieur est défini comme étant la zone comprise entre les deux moyens de guidage 2 et 2a. L'extérieur est défini comme étant les zones amont et aval en dehors des deux moyens de guidage 2 et 2a.

Les moyens de verrouillage 17 et 17a sont formés d'autre part avec des moyens de blocage extérieurs 22 et intérieurs 23 (Figures 10 et 11), solidarisés aux rampes (3). Les moyens de blocage extérieurs 22 et intérieurs 23 viennent coopérer avec la lame 19 correspondante. L'ouverture 21 sert à faire passer les moyens de blocage 22 et 23 de chaque côté des lames 19 et 19a.

Les extrémités 5 et 5a du cadre support 13 de la rampe 3 comprennent chacune des extensions amont et aval 35, solidaire de la rampe 3. Les extensions 35 sont situées au niveau du point de pivotement et de coulissement sur les moyens de guidage amont 2 et aval 2a. Les moyens de blocage 22 et 23 sont positionnés de part et d'autre de la lame 19 et de part et d'autre de l'extension 35. Cette extension 35 comporte une rainure formant un logement de coulissement à profil rectangulaire 36 à l'intérieur de laquelle sont positionnées les moyens de blocage extérieurs 22 et la lame 19.

Dans la position verrouillée de l'extrémité amont 5, la lame 19 est fortement serrée entre les moyens de blocage extérieurs 22 et une face intérieure de la paroi du logement 36. Cette extension 35 est ménagée avec un orifice 27 à l'intérieur duquel coulissent les moyens de blocage 23.

Les moyens de blocage extérieurs 22 sont formés d'un axe mobile 24 circulant à travers l'ouverture oblongue 21 de la lame 19. L'axe 24 se prolonge au niveau d'une extrémité extérieure par une tête plate mobile 26. La tête 26 est positionnée sur un côté extérieur de la lame 19 et vient serrer cette lame 19 contre la face intérieure de la paroi du logement 36 pour le verrouillage. L'axe 24 et la tête 26 agissent sous l'action des moyens de blocage intérieurs 23 disposés de l'autre côté de cette lame 19.

Les moyens de blocage intérieurs 23 sont formés d'un élément d'actionnement mobile ou poussoir 25, traversé sur toute sa longueur par un trou central recevant une extrémité intérieure de l'axe 24. Le poussoir 25 possède une première partie 25a tubulaire coulissant à l'intérieur de la cavité 27. Cette première partie 25a est repoussée vers l'intérieur et hors de cette cavité 27 au moyen d'un ressort en compression 29 disposé au fond de la cavité 27.

Le poussoir 25 possède une seconde partie tubulaire ou bouton 25b présentant un rebord d'appui 28 configuré pour venir buter contre l'extension 35 dans la position déverrouillée. Ce bouton 25b présente une creusure intérieure 30 à son extrémité libre dans laquelle vient se positionner un écrou 31 vissé à l'extrémité intérieure de l'axe 24.

Les moyens de blocage amont et aval 22 et 23 sont symétriques l'un à l'autre et permettent d'obtenir à volonté le verrouillage et le déverrouillage des extrémités amont 5 et aval 5a aux lames respectives amont 19 et aval 19a.

Dans la position déverrouillée (voir Figure 10), sous l'action de la tige 12 du vérin 8, l'appui 14 vient repousser le poussoir 25 par appui sur le bouton 25b. Le bouton 25b est repoussé ainsi contre l'extension 35. Le bouton 25b entraîne la première partie 25a contre le ressort en compression 29. La première partie 25a coulisse et rentre dans la cavité 27. La première partie 25a entraîne l'axe 24 vers l'extérieur à travers l'ouverture oblongue 21 de la lame 19. Par voie de conséquence, la tête 26 de l'axe 24 n'est donc plus en appui sur la lame 19.

Pour entraîner l'extension 35, et par conséquent les extrémités 5 et 5a de la rampe 3 dans leur mouvement latéral le long desdits moyens de guidage amont 2 et aval 2a et à les disposer selon une configuration en éventail, le chariot 4 comprend selon l'invention des moyens de saisie amont et aval. Ces moyens de saisie sont formés de plusieurs ergots 33 disposées à proximité de l'appui 14 et 14a. L'appui 14 est muni sur ses bords latéraux d'ergots de blocage 33. Ces ergots sont configurés pour venir se positionner autour du poussoir 25 de part et d'autre de l'extension 35, lorsque l'appui 14 s'approche puis pousse le poussoir 25.

L'unité de séparation 10 telle que décrite ci-dessus peut indifféremment être commandée manuellement par un opérateur ou peut fonctionner de manière automatique.

Ce déplacement peut se faire soit sous le contrôle manuel d'un opérateur, soit automatiquement. Dans ce dernier cas, il est préférable d'intégrer des moyens de détection sur le chariot 4, ces moyens étant aptes à détecter la présence de moyens de repérage présents sur les rampes de convoyage 3. Ces moyens de détection sont par exemple des détecteurs de type inductif, aptes à détecter la présence d'une partie métallique disposée à faible distance. Les moyens de détection servent à aligner les moyens de déverrouillage du chariot 4 avec les moyens de verrouillage 17 et 17a des rampes 3, en pilotant de manière précise l'entraînement du chariot 4.

Des moyens de contrôle par ordinateur sont prévus de manière à contrôler de manière automatique le déplacement du chariot 4 et des vérins 8 et 8a. Ce contrôle automatique peut se faire en fonction de données préalablement enregistrées dans l'ordinateur, à savoir les dimensions des boîtes 20, le nombre de rampes 3, la position initiale des rampes 3 par rapport aux boîtes 20 ou encore l'espacement latéral entre les boîtes 20 au niveau de l'extrémité de livraison. Ce contrôle automatique se fait en fonction des informations reçues des moyens de détection détectant la position des rampes 3 et du chariot 4.

La présente invention n'est pas limitée aux modes de réalisation décrits et illustrés. De nombreuses modifications peuvent être réalisées, sans pour autant sortir du cadre défini par la portée du jeu de revendications.

## Revendications

1. Unité destinée à séparer un support prédécoupé en plusieurs sous-supports séparés (20), comprenant :
- des moyens de guidage transversaux amont (2) et aval (2a),
- des rampes de convoyage (3), aptes à convoyer le support prédécoupé et les sous-supports séparés (20), et montées coulissantes et pivotantes sur les moyens de guidage amont (2) et aval (2a),
- des moyens de déplacement et de positionnement (4) des rampes (3) le long desdits moyens de guidage amont (2) et aval (2a), et
- des moyens de verrouillage amont (17) et aval (17a), aptes à maintenir chacune desdites rampes (3) dans une position verrouillée par rapport auxdits moyens de guidage amont (2) et aval (2a),
**caractérisée en ce que** les moyens de déplacement et de positionnement comprennent un élément mobile (4), se déplaçant entre lesdits moyens de guidage amont (2) et aval (2a), et portant
- des moyens de déverrouillage amont (8, 12, 14) et aval (8a, 12a, 14a), aptes à coopérer avec les moyens de verrouillage amont (17) et aval (17a), pour permettre de libérer lesdites rampes (3), et
- des moyens de saisie amont et aval (33) aptes à saisir lesdites rampes (3),
de façon à entraîner lesdites rampes (3), le long desdits moyens de guidage amont (2) et aval (2a) et à les disposer selon une configuration en éventail.

2. Unité selon la revendication 1, **caractérisée en ce que** les moyens de verrouillage amont (17) et aval (17a), comprennent une coulisse amont (19) et aval (19a) sensiblement parallèle aux moyens de guidage amont (2) et aval (2a), et des moyens de blocage amont et aval (22, 23) solidarisés aux rampes (3) venant coopérer avec la coulisse (19, 19a), de façon à bloquer en position lesdites rampes (3) sur ladite coulisse (19, 19a).

3. Unité selon la revendication 2; **caractérisée en ce que** les moyens de blocage (22, 23) comprennent un l'élément mobile d'actionnement (25) enserrant la coulisse (19, 19a) maintenu à une partie fixe (35) solidaire des rampes (3).

4. Unité selon la revendication 3, **caractérisée en ce que** lesdits moyens de déverrouillage amont et aval, sont formés d'une tige amont et aval (12, 12a) mobile sous l'action d'un vérin amont et aval (8, 8a), la tige (12, 12a) comportant à son extrémité libre un appui (14, 14a) destiné à venir appuyer sur l'élément mobile d'actionnement (25).

5. Unité selon la revendication 4, **caractérisée en ce que** les moyens de saisie (33) sont formés de plusieurs ergots (33), disposées à proximité de l'appui (14, 14a) et configurés pour venir se positionner autour de l'élément mobile d'actionnement (25).

6. Unité selon l'une quelconque des revendications précédentes, **caractérisée en ce que** l'élément mobile (4) se déplace le long d'un rail central (6).

7. Unité selon l'une quelconque des revendications précédentes, **caractérisée en ce que** l'élément mobile (4) est actionné par une courroie crantée entrainée par moteur.

8. Unité selon l'une quelconque des revendications précédentes, **caractérisée en ce qu'**elle comprend des moyens de détection intégrés à l'élément mobile (4) aptes à détecter la présence de moyens de repérages positionnés sur les rampes (3), de manière à aligner de manière précise les moyens de déverrouillage (14, 14a) de l'élément mobile (4) avec les moyens de verrouillage (17, 17a) des rampes (3).

9. Unité selon l'une quelconque des revendications précédentes, **caractérisée en ce qu'**elle comprend une zone de parcage (18) pour une ou plusieurs rampes non utilisées.

10. Machine de production d'emballage, **caractérisée en ce qu'**elle comprend une unité destinée à séparer un support prédécoupé (10) selon l'une quelconque des revendications précédentes, positionnée en aval d'une unité de découpe et d'une unité d'éjection des déchets.

11. Machine selon la revendication 10, **caractérisée en ce qu'**elle comprend un module d'alignement, positionné en aval de l'unité destinée à séparer un support prédécoupé (10).

## Patentansprüche

1. Einheit zum Zerteilen eines vorgestanzten Trägers in mehrere separate Unterträger (20), umfassend:
- stromaufwärtige (2) und stromabwärtige (2a) quergerichtete Führungsmittel,
- Transportrampen (3), die geeignet sind, den vorgestanzten Träger und die separaten Unterträger (20) zu transportieren, und die auf den stromaufwärtigen (2) und stromabwärtigen (2a) Führungsmitteln verschiebbar und drehbar gelagert sind,
- Mittel zum Bewegen und Positionieren (4) der Rampen (3) entlang der stromaufwärtigen (2) und stromabwärtigen (2a) Führungsmittel, und
- stromaufwärtige (17) und stromabwärtige (17a) Verriegelungsmittel, die geeignet sind, jede der Rampen (3) in einer relativ zu den stromaufwärtigen (2) und stromabwärtigen (2a) Führungsmitteln verriegelten Position zu halten, **dadurch gekennzeichnet, dass** die Mittel zum Bewegen und Positionieren ein bewegliches Element (4) umfassen, das sich zwischen den stromaufwärtigen (2) und stromabwärtigen (2a) Führungsmitteln bewegt und Folgendes trägt:
- stromaufwärtige (8, 12, 14) und stromabwärtige (8a, 12a, 14a) Entriegelungsmittel, die für das Zusammenwirken mit den stromaufwärtigen (17) und stromabwärtigen (17a) Verriegelungsmitteln geeignet sind, um die Rampen (3) freizugeben, und
- stromaufwärtige und stromabwärtige Greifmittel (33), die zum Greifen der Rampen (3) geeignet sind,
derart, dass die Rampen (3) entlang der stromaufwärtigen (2) und stromabwärtigen (2a) Führungsmittel mitgenommen und in einer fächerartigen Ausgestaltung angeordnet werden.

2. Einheit nach Anspruch 1, **dadurch gekennzeichnet, dass** die stromaufwärtigen (17) und stromabwärtigen (17a) Verriegelungsmittel eine stromaufwärtige (19) und stromabwärtige (19a) Gleitführung umfassen, die im Wesentlichen zu den stromaufwärtigen (2) und stromabwärtigen (2a) Führungsmitteln parallel ist, und stromaufwärtige und stromabwärtige (22, 23) Blockiermittel, die mit den Rampen (3) fest verbunden sind und mit der Gleitführung (19, 19a) zum Zusammenwirken kommen, um die Rampen (3) in Position auf der Gleitführung (19, 19a) zu blockieren.

3. Einheit nach Anspruch 2, **dadurch gekennzeichnet, dass** die Blockiermittel (22, 23) ein bewegliches Antriebselement (25) umfassen, das die Gleitführung (19, 19a) einspannt, die an einem nicht beweglichen Teil (35), das mit den Rampen (3) fest verbunden ist, gehalten wird.

4. Einheit nach Anspruch 3, **dadurch gekennzeichnet, dass** die stromaufwärtigen und stromabwärtigen Entriegelungsmittel von einer stromaufwärtigen und stromabwärtigen Stange (12, 12a) gebildet sind, die unter Einwirkung eines stromaufwärtigen und stromabwärtigen Zylinders (8, 8a) beweglich sind, wobei die Stange (12, 12a) an ihrem freien Ende eine Abstützung (14, 14a) aufweist, die vorgesehen ist, auf dem beweglichen Antriebselement (25) zur Abstützung zu kommen.

5. Einheit nach Anspruch 4, **dadurch gekennzeichnet, dass** die Greifmittel (33) von mehreren Absätzen (33) gebildet sind, die nahe der Abstützung (14, 14a) angeordnet sind und die ausgestaltet sind, um sich um das bewegliche Antriebselement (25) herum zu positionieren.

6. Einheit nach einem der vorhergehenden Ansprüche, **dadurch gekennzeichnet, dass** das bewegliche Element (4) sich entlang einer mittigen Schiene (6) bewegt.

7. Einheit nach einem der vorhergehenden Ansprüche, **dadurch gekennzeichnet, dass** das bewegliche Element (4) durch einen motorbetriebenen Zahnriemen angetrieben wird.

8. Einheit nach einem der vorhergehenden Ansprüche, **dadurch gekennzeichnet, dass** sie Detektionsmittel umfasst, die in das bewegliche Element (4) integriert sind und geeignet sind, das Vorhandensein von Markierungsmitteln auf den Rampen (3) zu detektieren, derart, dass die Entriegelungsmittel (14, 14a) des beweglichen Elements (4) mit den Verriegelungsmitteln (17, 17a) der Rampen (3) präzise ausgerichtet werden.

9. Einheit nach einem der vorhergehenden Ansprüche, **dadurch gekennzeichnet, dass** sie eine Parkzone (18) für eine oder mehrere Rampen umfasst, die nicht verwendet werden.

10. Maschine zum Herstellen von Verpackungen, **dadurch gekennzeichnet, dass** sie eine Einheit zum Zerteilen eines vorgestanzten Trägers (10) nach einem der vorhergehenden Ansprüche umfasst, die stromabwärts zu einer Einheit zum Stanzen und einer Einheit zum Auswerfen der Abfälle positioniert ist.

11. Maschine nach Anspruch 10, **dadurch gekennzeichnet, dass** sie ein Ausrichtungsmodul umfasst, das stromabwärts zu der Einheit zum Zerteilen eines vorgestanzten Trägers (10) positioniert ist.

## Claims

1. A unit designed to separate a pre-cut substrate into a plurality of separate sub-substrates (20), comprising:
- upstream and downstream transverse guide means (2; 2a),
- conveyor ramps (3) able to convey the pre-cut substrate and the separated sub-substrates (20) and mounted to slide and pivot on the upstream and downstream guide means (2; 2a),
- means for moving and positioning (4) the ramps (3) along said upstream and downstream guide means (2; 2a), and
- upstream and downstream locking means (17; 17a) able to maintain each of said ramps (3) in a locked position relative to said upstream and downstream guide means (2; 2a), **characterized in that** the moving and positioning means comprise a mobile element (4) moving between said upstream and downstream guide means (2; 2a) and carrying
- upstream and downstream unlocking means (8, 12, 14, 8a, 12a, 14a) able to cooperate with the upstream and downstream locking means (17; 17a) to enable release of said ramps (3), and
- upstream and downstream grasping means (33) able to grasp said ramps (3) so as to drive said ramps (3) along said upstream and downstream guide means (2; 2a) and to dispose them in a fan configuration.

2. The unit as claimed in claim 1, **characterized in that** the upstream and downstream locking means (17; 17a) comprise an upstream and downstream slide (19; 19a) substantially parallel to the upstream and downstream guide means (2; 2a), and upstream and downstream fixing means (22, 23) joined to the ramps (3) cooperating with the slide (19, 19a) so as to fix in position said ramps (3) on said slide (19, 19a).

3. The unit as claimed in claim 2, **characterized in that** the fixing means (22, 23) comprise a mobile actuator element (25) clamping the slide (19, 19a) maintained to a attached part (35) joined to the ramps (3).

4. The unit as claimed in claim 3, **characterized in that** said upstream and downstream unlocking means are formed with upstream and downstream rods (12, 12a) mobile by upstream and downstream cylinders (8, 8a), the rod (12, 12a) including at its free end a bearing member (14, 14a) designed to bear on the mobile actuator element (25).

5. The unit as claimed in claim 4, **characterized in that** the grasping means (33) are formed of a plurality of lugs (33) disposed in the vicinity of the bearing member (14, 14a) and configured to be positioned around the mobile actuator element (25).

6. The unit according to any one of the preceding claims, **characterized in that** the mobile element (4) moves along a central rail (6).

7. The unit according to any one of the preceding claims, **characterized in that** the mobile element (4) is actuated by a toothed belt driven by a motor.

8. The unit according to any one of the preceding claims, **characterized in that** it includes detector means integrated into the mobile element (4) able to detect the presence of marker means positioned on the ramps (3) so as precisely to align the unlocking means (14, 14a) of the mobile element (4) with the locking means (17, 17a) of the ramps (3).

9. The unit according to any one of the preceding claims, **characterized in that** it includes a parking area (18) for one or more unused ramps.

10. A packaging production machine, **characterized in that** it includes a unit as claimed in any one of the preceding claims designed to separate a pre-cut substrate (10), positioned downstream of a cutting unit and a waste stripping unit.

11. The machine as claimed in claim 10, **characterized in that** it includes an alignment module positioned downstream of the unit designed to separate a pre-cut substrate (10).
